(19) Europäisches Patentamt

European Patent Office

Office européen des brevets

(11) **EP 1 007 948 B1**

(12) **EUROPÄISCHE PATENTSCHRIFT**

(45) Veröffentlichungstag und Bekanntmachung des Hinweises auf die Patenterteilung:
**13.02.2002 Patentblatt 2002/07**

(21) Anmeldenummer: 97930418.5

(22) Anmeldetag: **26.06.1997**

(51) Int Cl.⁷: **G01N 21/71**

(86) Internationale Anmeldenummer:
**PCT/EP97/03360**

(87) Internationale Veröffentlichungsnummer:
**WO 98/00702 (08.01.1998 Gazette 1998/01)**

(54) **VERFAHREN UND ANORDNUNG ZUR LASER-INDUZIERTEN SPEKTRALANALYSE**

PROCESS AND ARRANGEMENT FOR LASER-INDUCED SPECTRAL ANALYSIS

PROCEDE ET DISPOSITIF POUR L'ANALYSE SPECTRALE AU LASER

(84) Benannte Vertragsstaaten:
**CH DE FR GB IT LI LU NL**

(30) Priorität: **01.07.1996 DE 19626320**

(43) Veröffentlichungstag der Anmeldung:
**14.06.2000 Patentblatt 2000/24**

(73) Patentinhaber: **EMTEC Magnetics GmbH
67059 Ludwigshafen (DE)**

(72) Erfinder:
• **ROHR, Klaus
D-67663 Kaiserslautern (DE)**
• **EICHER, Jochen
D-67157 Wachenheim (DE)**
• **MÜLLER, Norbert
D-67159 Friedelsheim (DE)**

(56) Entgegenhaltungen:
DE-A- 1 939 600          DE-A- 4 341 462
US-A- 4 687 539

• **MIKIO KUZUYA ET AL: "EFFECT OF LASER ENERGY AND ATMOSPHERE ON THE EMISSION CHARACTERISTICS OF LASER-INDUCED PLASMAS" APPLIED SPECTROSCOPY, Bd. 47, Nr. 10, Oktober 1993, Seiten 1659-1664, XP000397749**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 007 948 B1

## Beschreibung

Die Erfindung betrifft Verfahren und Anordnungen zur Spektral-analyse mittels Laseremission von Halogen, insbesondere Chlor, enthaltenden, nichtmetallischen oder höchstens teilmetallischen Stoffen, wobei ein gepulster Laserstrahl auf den Stoff gelenkt wird zur Erzeugung eines Plasmas und das vom Plasma in einer Expansionsrichtung in Kegelform emittierte Licht optisch fokussiert, einem Spektrometer zugeführt und nach einem vorgegebenen Zeitverzögerung nach Auslösung des Laserstrahls analysiert wird und wobei der gepulste Laserstrahl eine Energiedichte zwischen etwa $10^8$ und etwa $10^{12}$ W/cm$^2$ besitzt.

Ein derartiges Verfahren und eine Anordnung dafür sind beispielsweise aus der EP-B-176 625 für die Spektralanalyse von Stahl bereits bekannt, wobei das von einem quasi punktförmigen Plasmavolumen emittierte Licht über einen Photofilm, eine Photodiode oder eine Photo-Vervielfacher-Röhre eindimensional erfaßt zur Analyse ausgewertet wird. Dieses bekannte Verfahren benötigt die Einleitung von Inertgas, um die Genauigkeit der Analysenergebnisse zu verbessern. Verfahren und Anordnung sind zur Spektralanalyse von Halogenen nicht geeignet.

Prinzipiell basiert die Spektralanalyse darauf, daß die Intensität der Spektrallinien proportional der Dichte $n_i$ der emittierenden Atome des Stoffes im Zustand i und dem Boltzmannfaktor $e^{-E_i/kT}$ mit $E_i$ der Anregungsenergie und T der Temperatur ist. In einem Gas oder Plasma konstanter Dichte und Temperatur eröffnet sich damit in einfacher Weise die Möglichkeit selbst einer quantitativen Analyse. Im durch gepulsten Laserstrahl erzeugten Plasma ist die Situation dadurch wesentlich komplizierter, da das Plasma zeitlich und räumlich, sowohl in der Dichte, als auch in der Temperatur, starke Gradienten aufweist, also nicht homogen ist, wobei die Gradienten außer von den Erzeugungsbedingungen noch von den einzelnen Stoffen abhängen.

Der vorliegenden Erfindung liegt daher die Aufgabe zugrunde, in vorstehender Hinsicht die Verfahren und Anordnungen für die laser-induzierte Spektralanalyse von Halogen, insbesondere Chlor, enthaltenden, nichtmetallischen und höchstens teilmetallischen Stoffen zu verbessern.

Die Aufgabe wird mit dem Verfahren der eingangs genannten Art dadurch gelöst, daß zeitlich und räumlich über einen Bereich der Dichte- und Temperaturgradienten des Plasmas gemittelt wird, um eine stabile reproduzierbare Spektrallinien-Information für die Analyse zu erhalten, indem die gesamten, von wenigstens einem Scheibenvolumen des Expansionskegels ausgehenden Lichtintensitäten aufsummiert und gemittelt werden.

Da diese Verfahrensweise in zeitlich vorgegebener, kurzer Zeit erfolgt, während der die Temperatur des verdünnten Plasmas genügend hoch bleibt und damit die spezifische Lichtemission von Chlor, kann ein großes Plasmavolumen vollständig, vor allem auch für die quantitative Spektralanalyse, verwertet werden.

Ein sicherer und reproduzierbarer, relativ einfacher, schneller und flexibler Nachweis von Halogenen und insbesondere von Chlor in Stoffzusammensetzungen ist ein spezieller Vorteil des vorliegenden Verfahrens und der dazugehörigen Anordnung.

Die Hauptursache, daß die laser-induzierte Spektralanalyse von Chlor bisher nicht gelungen ist liegt darin, daß die angeregten Zustände der Atome der Halogene energetisch sehr hoch liegen, bei ca. 10 eV. Entsprechend dem Boltzmannfaktor treten daher starke Emissionen nur im Gebiet des heißen Plasmafokus mit Temperaturen von ca. $10^5$ °K auf. In diesem Gebiet ist die Elektronendichte des Plasmas aber sehr hoch, so daß die Linienemission von der intensiven Bremsstrahlung gleicher Wellenlänge der in hoher Dichte dort vorhandenen Elektronen völlig überlagert wird und damit eine Analyse verhindert wird. Da die Resonanzübergänge bei Halogenen zudem folglich im Wellenlängenbereich von typisch 100 nm liegen, ist deren Detektion nur mit dem wesentlich größeren Aufwand der VUV-Spektroskopie möglich.
(VUV $\doteq$ Vakuum-Ultra-Violett-Bereich $\lambda$ < 250 nm)

Es ist für das Verfahren vorteilhaft, daß das Scheibenvolumen (mit Kegelschnitt- oder Eck-Form) durch einen einzigen Laserschuß erzeugbar ist und überraschenderweise für die Spektralanalyse ausreicht. In weiterer Ausbildung des Verfahrens wird das Scheibenvolumen über den Eingangsspalt des Spektrometers abgebildet und spektral zerlegt, und das Spektrum des Scheibenvolumens zweidimensional durch ein matrixförmiges Bildaufnahmesystem erfaßt. Vorteilhaft ist es weiterhin, als matrixartigen Bildaufnehmer eine CCD-Kamera mit einem wenigstens 10 Zeilen-Chip zu verwenden. Dadurch können möglichst viele Beiträge zu einer Wellenlänge durch Addition der Information der jeweiligen Licht-Intensitäten in der entsprechenden Zeile oder Spalte des Bildaufnehmers bzw. des CCD-Chips ausgenutzt werden.

Das bringt die Vorteile, daß a) im Gegensatz zur üblichen höchstens zeilenweisen Speicherung (z.B. durch eine Zeilenkamera) sich ein Gewinn an Intensität entsprechend der Zahl der aufsummierten Zeilen oder Spalten n, sowie b) eine gleichzeitige Verbesserung der Statistik entsprechend

$$n^{\frac{1}{2}}$$

(Wurzel aus n) ergibt.

Dies erlaubt ebenfalls kürzere Analysezeiten. Im Fall, daß n = 500 ist, beträgt die Verbesserung der Statistik etwa den Faktor 22, bei n = 2000, jedoch schon den Faktor 44, also doppelt so viel. Eine 500 Zeilen CCD-Standard-Kamera ist praktisch jedoch ausreichend.

Es hat sich als überraschend günstig herausgestellt, ein endliches, genügend großes Scheibenvolumen des Expansionskegels für die Analyse heranzuziehen. Es ergibt sich damit die Möglichkeit der räumlichen und zeitlichen Mittelung über die Lichtemission des gesamten, darin befindlichen, inhomogenen Dichte- und Temperaturbereichs des Plasmas. Dadurch wird das Analyseverfahren relativ unkritisch gegenüber immer vorhandenen Schuß-zu-Schuß-Schwankungen der Plasma-Dichte- und -Temperaturverteilung, etwa beim Wechsel zu unterschiedlichen Stoffen und/oder Untersuchungen in verschiedenen zusätzlichen Spektralbereichen. Das Scheibenvolumen selbst kann dabei mit seiner Längsausdehnung (gegeben durch die Längsrichtung des Spektrometerspalts) in Expansionsrichtung, oder, aber bevorzugt, senkrecht zur Expansionsrichtung liegen. Im Vergleich zu der auch bei Analysen mit Zeilenkameras vorhandenen Mittelung über einen kleinen Bereich, beträgt der Gewinn im vorliegenden Fall ca. zwei Größenordnungen (typischerweise gegeben durch das Verhältnis von Spektrometerspalthöhe/-breite = 5 mm/0,01 mm = 500). Der mittlere Fokusabstand zwischen dem zu analysierenden Stoff und dem Scheibenvolumen kann für die Chlor-Analyse etwa 3 bis 6 mm betragen.

Eine Serienerfassung der Intensitätswerte von mehreren Plasmen ist möglich über mehrere Scheibenvolumina bei aufeinanderfolgenden Laserschüssen.

In weiterer Verfahrensausgestaltung sollte der gepulste Laserstrahl eine Gauß-Verteilung besitzen, die vorteilhaft von einem in $TEM_{oo}$-Mode betriebenen Laser erzeugt werden kann. Derartige Laser besitzen eine besondere Stabilität bezüglich Energie und Strahlform, so daß eine hohe Schuß-zu-Schuß-Reproduzierbarkeit im Fokalbereich und auch im Plasma erreicht wird.

Die vorgegebene Zeitverzögerung sollte für die Chlor-Analyse bei den genannten Fokusabständen zweckmäßig 4 µs betragen, da zu diesem Zeitpunkt der Erzeugung des Plasmas die Bremsstrahlung nicht mehr stört und gleichzeitig die Emissionsstärke der für die Analyse wichtigen Chlor-Linie bei ca. 838 nm maximal ist.

Zweckmäßig kann die Lichtintensität während eines Zeitfensters von wenigstens 100 ns nach Ablauf der vorgegebenen Zeitverzögerung analysiert werden.

Das Zeitfenster der des Bilderfassungssystems (Verstärker-Zeitschalter-Aufnehmer) sollte durch Verwendung einer elektronischen Steuerung, in Verbindung mit einem Bildverstärker, mit einer Zeitauflösung im 10 ns-Sekunden-Bereich entsprechend der zu analysierenden Spektrallinien optimierbar sein. Die Optimierung hängt von den Laser-Objekt-Bindungen (Art des Lasers, zu analysierender Stoff), der Lage der jeweiligen charakteristischen Spektrallinie sowie vom Fokalabstand des zu untersuchenden Volumens ab. In praktischer Ausführung kann der matrixartige Bildaufnehmer eine CCD-Kamera mit einem wenigstens 10 Zeilen-Chip sein. Günstiger und preiswerter sind Standard-Kameras (etwa 500 bis etwa 600 Zeilen und Spalten), eine Spezialkamera mit mehr Zeilen und vor allem Spalten, z.B. 2000, wäre für das Meßverfahren jedoch noch günstiger.

Es ist ebenfalls zweckmäßig, wenn die dem matrixartigen Bildaufnahmesystem nachgeschaltete digitale Speicher- und Auswertelogik wenigstens 4 Bit Speichertiefe und wenigstens etwa 15 x 15 Speicherplätze besitzt. Eine höhere Speichertiefe von ca. 8 bis 12 Bit und mit entsprechend dem Bilderfassungssystem angepaßter Zahl von Speicherplätzen wäre wünschenswert.

In weiterer Verbesserung des Verfahrens ist es günstig, wenn das entstehende Plasma mittels einer zusätzlichen elektrischen Entladung spezifisch nachangeregt wird und das dann emittierte Licht, wie beschrieben, dem Spektrometer zugeführt wird.

Damit läßt sich die Empfindlichkeit des Halogen-Nachweises, insbesondere des Chlor-Nachweises, um etwa den Faktor 10 steigern. Es ergibt sich für Chlor, z.B. in der beschriebenen Anordnung, eine Nachweisgrenze von unter 1 %, sogar bis ca. 0,5 %.

In zweckmäßiger Ausbildung des Verfahrens werden für die Chlor-Analyse die Spektrallinien im Bereich von etwa 480 nm bis etwa 550 nm oder bei 837,594 nm oder bei 858,597 nm herangezogen.

Damit werden vorteilhaft starke Linien benutzt, die im Spektralbereich bzw. zumindest im mit glasoptischen Komponenten erfaßbaren Bereich von ca. 300 nm bis 3000 nm und bevorzugt im sichtbaren bzw. nahen Infrarot-Bereich liegen und die nicht von starken anderen Linien der übrigen Konstituenten (z.B. H, O, N, C von nichtmetallischen Stoffen) überdeckt werden. Als sehr günstig hat sich die Linie im nahen Infrarot-(IR) Bereich von 837.594 nm (ca. 838 nm) erwiesen, jedoch erbrachten auch die anderen Linien im Bereich zwischen ca. 480 und 550 nm und bei 858,597 nm (ca. 859 nm) gute Analyseergebnisse.

Das oben anhand der Verfahrens-Patentansprüche erläuterte erfindungsgemäße Verfahren läßt sich vorteilhaft mit erfindungsgemäßen Anordnungen durchführen mit den folgenden Merkmalen:

Die Anordnung umfaßt einen gepulsten Laser, der insbesondere im $TEM_{oo}$-Mode betrieben wird, dessen Laserstrahl mit einer Energiedichte (Intensität) von zwischen etwa $10^8$ und etwa $10^{12}$ W/cm², auf den nichtmetallischen bzw. teilmetallischen Stoff gerichtet ist, eine optisch fokussierende Einrichtung, die das vom Plasma emittierte Licht zum Spalt eines Spektromecers lenkt und bündelt, einen matrixartigen Bildaufnehmer, mit dem die Intensität des über den Spektrometerspalt abgebildeten, Scheibenvolumens des emittierten Lichts nach Durchgang durch das Spektrometer spektral aufgelöst und zeitlich und räumlich mittels einer Bildspeicher- und Auswerteeinrichtung aufsummierbar ist, und eine Steuereinrichtung zwischen dem Laser, dem Spektrometer, dem Bildspeicher und der Auswerteeinrichtung zum zeitintervallrichtigen Speichern und Analysieren der Spektralsignale des emittierten Lichts.

Die Bildspeicher- und Auswerteeinrichtungen enthalten vorteilhaft digitale Logik-Bausteine und sind dem Bildaufnehmer nachgeschaltet. Damit wird eine vorteilhafte Anordnung mit einem sehr geeigneten, gepulsten Lasertyp, der z.B. ein gütegeschalteter oder modem-gekoppelter Nd-YAG-Laser ist, einer einfachen optisch fokussierenden Einrichtung und einer Zeitsteuereinrichtung bereitgestellt, wobei letztere nach Auslösen des Laserpulses die vorgegebene Zeitverzögerung zwischen einzelnen Analysen, das Zeitfenster des Bildaufnahme- und Bildspeicher- und Auswertesystems und damit die Aufnahme der Spektralsignale und auch noch deren digitale Abspeicherung und Auswertung steuert, bevor der nächste Laserpuls auslösbar ist. Dadurch ergibt sich eine optimale Zeitausnutzung der Analyse-Anordnung.

In praktisch vorteilhafter Ausbildung ist der matrixartige Bildspeicher eine CCD-Kamera mit wenigstens 10, insbesondere etwa 500 bis etwa 600 Zeilen (waagrechten und senkrechten Sensorplätzen).

Zur Erzeugung des Zeitfensters ist es vorteilhaft, wenn dem Bildspeicher ein Bildverstärker vorgeschaltet ist. Das Spektrometer kann zweckmäßig bildfeldkorrigierende Elemente (Falt Field Imit) enthalten.

Eine Verbesserung der Detektionsempfindlichkeit des Verfahrens und der Anordnung wird durch Verwendung einer Nachanregungseinrichtung erreicht, die zweckmäßig aus einer getriggerten Funkenstrecke mit Cu-Elektroden, ca. 5 KV Spannung und einer Kapazität von ca. 2 µF und einer Induktivität von ca. 100 µH bestehen kann, bei einer Funkenenergie von ca. 25 Ws. Damit wird z.B. ein Chlornachweis bis zu einem Volumenanteil von 0,5 % ermöglicht.

Weitere praktisch günstige Merkmale sind eine langbrennweitige Fokussierung des Laserstrahls auf das Target, um einerseits einen großen Arbeitsabstand zu ermöglichen und um andererseits eine Strahlform großer Rayleighlänge zu erreichen. Dadurch sind Unebenheiten am zu analysierenden Objekt weniger kritisch. Weiterhin ist, falls eine Mikroanalyse nicht angestrebt wird, ein großer Fokusfleck von ca. 0,1 mm bis ca. 1 mm Durchmesser günstig, da dadurch über Unterschiede am Objekt gemittelt wird und eine höhergradige eindimensionale (in Normaleinrichtung des Objekts) Expansion des Plasmas mit daraus folgenden besseren Analysemöglichkeiten erreicht wird.

Für den Halogennachweis ist eine hohe Plasmatemperatur wesentlich. Für eine hohe Plasmatemperatur günstig ist eine hohe Absorption des eingestrahlten Laserlichts am zu analysierenden Stoff und im expandierenden Plasma, was dadurch erreicht werden kann, daß eine möglichst kurze Wellenlänge des Lasers benutzt wird, z.B. die frequenzvervielfachte Nd-YAG Grundwellenlänge von 1,06 µm bis ins Ultraviolette, z. B. 250 nm. Eine gezielte Erhöhung der Anfangsabsorption (vor allem bei langem Laserpuls z.B. im ns-Bereich) ist durch gezielte, dünne Beschichtung des Objekts mit einem stark für die benutzte Wellenlänge des Lasers absorbierenden, jedoch nicht die Analyse störenden Stoff, etwa Graphit, günstig.

Eine erfindungsgemäße Anordnung wird nachfolgend anhand des in Figuren 1 und 2 der Zeichnung dargestellten Schemas beispielhaft beschrieben, und Beispiele von Analyse-Spektrallinien sind in Figur 3 dargestellt.

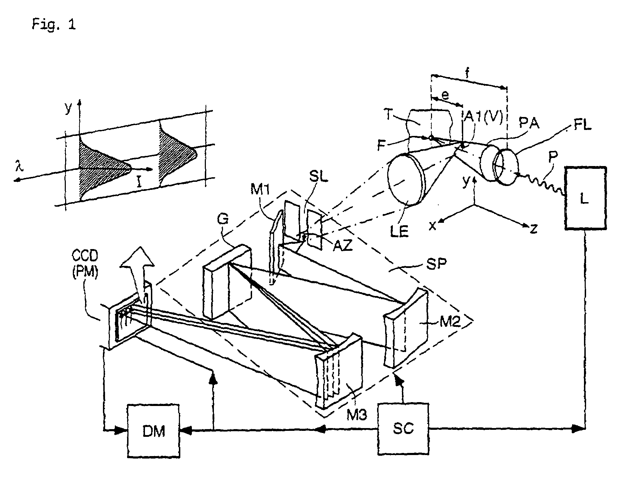

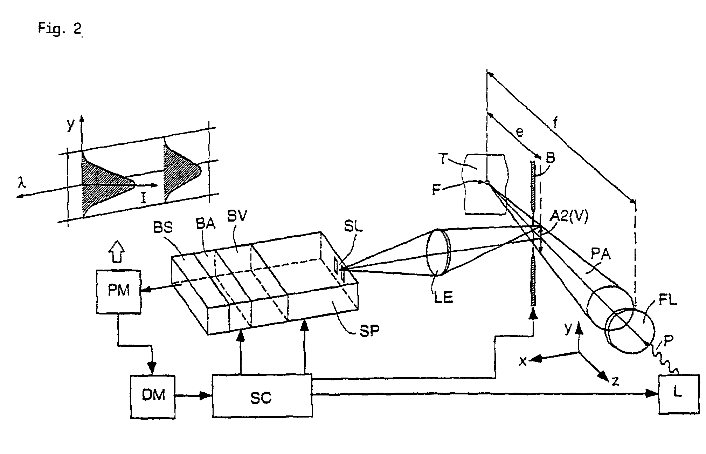

Der Laser L wird über die Steuereinheit SC zur Abgabe eines Laserpulses P veranlaßt. Der Laserpuls P wird über eine Optik FL auf den zu analysierenden nichtmetallischen oder höchstens teilmetallischen Stoff T fokussiert und erzeugt dort ein Plasma PA, das sich z.B. in Form eines Expansionskegels ausbreitet. In Richtung auf ein Spektrometer SP ist eine abbildende Achromatoptik LE vorhanden, die ein Scheibenvolumen V des Plasmas mit dem mittleren Abstand e vom Objekt T auf den Eintrittsspalt SL des Spektrometers SP abbildet. Die Spaltlängsrichtung bestimmt dabei die Lage der ausgewählten Volumenscheibe (y- oder z-Richtung) des abzubildenden Plasmabereichs. In Figuren 1 und 2 ist eine Richtung senkrecht zur Hauptexpansionsrichtung des Plasmas P (y-Richtung) eingezeichnet. Die Längsausdehnung des Spalts SL (typisch 5 mm), zusammen mit der abbildenden Optik LE, definieren den Scheibendurchmesser des betrachteten Scheibenvolumens, die variable Spaltbreite (typisch ca. 10 µm) die Dicke der Volumenscheibe und vor allem die spektrale Auflösung. Daher ist die Spaltbreite SL nur im Rahmen der notwendigen Auflösung (typisch schlechtestenfalls einige nm) zur Vergrößerung der Lichtintensität frei wählbar. Auf der Möglichkeit, das Scheibenvolumen-Element dennoch durch Vergrößern in seiner Längsrichtung in seiner Größe zu verändern, frei in seiner Lage zu wählen und ganz oder teilweise zur Analyse heranzuziehen beruhen die vorliegenden Verfahrens- und - anordnungsmerkmale im wesentlichen.

Über die Optik LE wird ein Scheibenvolumen V des Plasma-Kegels PA auf den Spalt SW des Spektrometers SP abgebildet und nachfolgend spektral zerlegt.

Das Prinzip und die Richtung der Addition der Intensitätsgradienten sind durch die Pfeile A1 und A2 symbolisiert für den dargestellten Fall der Spaltrichtung in y-Richtung.

Aufgabe der Anordnung ist es, Routineuntersuchungen von halogenhaltigen Substanzen in Normalatmosphäre und ohne laborspezifischen Aufwand durchzuführen. Mit diesem Ziel sind die Komponenten der in Figuren 1 und 2 beschriebenen Anordnungen ausgewählt.

Als Spektrometer SP wird ein Einfachgitter-Monochromator f/4.0 mit einem 600 L/mm Gitter und Spiegeln M1 und M2, M3 und einer geeigneten Blazewellenlänge von 500 nm benutzt. Mit einem 1/2'' Bildaufnehmer BA (CCD) kann man damit einen Spektralbereich von ca. 60 nm in der Fokalebene ausnutzen. Mit Hilfe des variablem Eintrittsspalts SL wird die Lichtstärke soweit optimiert, wie es die Auflösung zuläßt. Die Spalthöhe wird entsprechend dem Abbildungsmaßstab und der Längsausdehnung des zu betrachtenden Plasmavolumens eingestellt (typisch 5 - 10 mm). Die spektralen Informationen in der Bildebene des Spektrometers SP können direkt vor der Weiterverarbeitung am Ausgang des dem Bildaufnahmesystems BA nachgeschalteten Bildspeichers BS auf einem Monitor PM kontrolliert und z.B. in der Justierphase so leicht optimiert werden. In Figuren 1 und 2 ist dies schematisch im Nebenbild für zwei Spektrallinien dargestellt, wobei die Intensität I als Graustufenbild, in Falschfarben oder als Pseudo-3-D Bild sichtbar gemacht werden kann. Der für die Aufnahme benutzte Bildaufnehmer BA sollte möglichst einen großen Dynamikbereich (ca. 1000) und einen weiten, verwendbaren Spektralbereich besitzen. Praktisch günstig ist eine CCD-Kamera mit wenigstens 10 Zeilen, zweckmäßigerweise jedoch, wie im vorliegenden Fall eine standardmäßige Kamera mit einem z. B. 752 x 582 (Spalten- mal Zeilen-)-Chip. Die Speichertiefe soll dabei wenigstens 4 Bit betragen und betrug im vorliegenden Gerät 8 Bit, anzustreben sind jedoch mindestens 10 Bit.

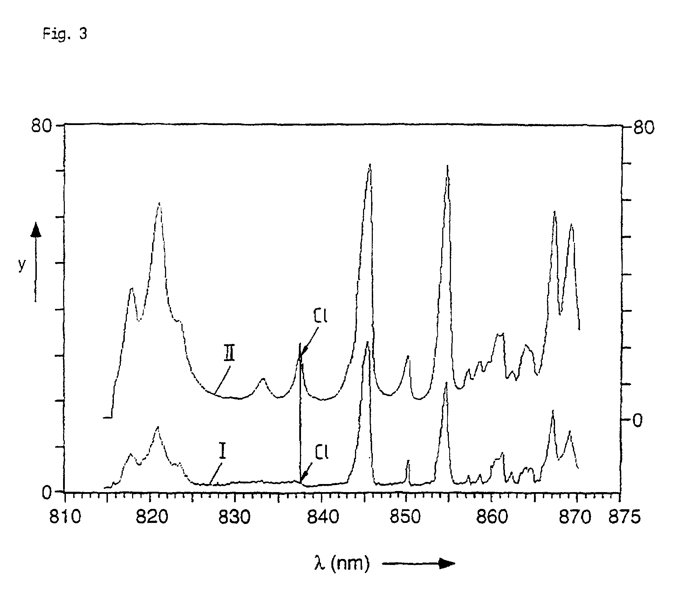

Die in Längsrichtung der Volumenscheibe enthaltenen spektralen Informationen, in Figuren 1 und 2 ist dies die y-Richtung, werden einzeln für jede Wellenlänge in der nachgeschalteten Auswerteeinheit DM aufsummiert und üblicherweise als Spektrum gemäß Figur 3 zur weiteren automatisierten Entscheidung zur Verfügung gestellt. Die Größe und die Lage des (in Figuren 1 und 2 in y-Richtung dargestellten) Teils des zur Analyse heranzuziehenden Scheibenvolumens V sind in der Auswerteeinheit DM optimal einstellbar, z.B. programmierbar. Im einfachsten Fall dient dazu ein Mikroprozessor oder Personalcomputer. Gleiches gilt für die Steuereinheit SC, der die gesamte Anordnungssteuerung obliegt, insbesondere die Ansteuerung des Lasers zur Auslösung weiterer Pulse, die Triggerung der Funkenstrecke B (in Figur 2) und des Bildaufnahmesystems BA, die motorische Wahl der Spektrometerwellenlänge und die Aktivierung der Auswerteeinheit DM.

Als Laser ist prinzipiell jedes System geeignet, das eine ausreichend große Leistung besitzt, so daß eine für die Materialverdampfung und Plasmaerzeugung notwendige Fokusintensiät (ca. $10^8$ bis $10^{12}$ W/cm$^2$) erreicht werden kann. Eine einfache Möglichkeit bietet ein gütegeschalteter Nd-YAG-Laser mit Pulsdauern im ns-Bereich in der Grundwellenlänge von 1,06 μm. Aus Gründen der Reproduzierbarkeit sollte dieser vorzugsweise im TEM$_{00}$-Mode arbeiten. Günstig ist es, gegebenenfalls die Plasmatemperatur und damit die Spektrallinienintensität durch Frequenzverdopplung des Lasers ins Grüne (530 nm) oder sogar weitere -vervielfachung bis in den UV-Bereich (z.B. 265 nm) zu erhöhen. Entsprechendes gilt für den verwendeten kurzen Q-switch Puls von 4 ns Dauer. Eine weitere Verbesserung bringt die Benutzung eines noch kürzeren Pulses, etwa den eines modengekoppelten Lasers mit Pulsdauern im 10 ps-Bereich. Bei langen Pulsen ist eine spezifische, die Analyse nicht störende Beschichtung des Objekts (z.B. mit Graphit) zur Erhöhung der Anfangsabsorption vor der Plasmabildung günstig.

In praktisch vorteilhafter Ausbildung besteht die das Plasma auf den Spektrometerspalt abbildende Optik LE aus einem Achromaten. Dessen Abbildungsmaßstab, Arbeitsabstand und Brennweite zusammen mit der Auflösung und Eintrittsspaltbreite des Spektrometers sind so gewählt, daß das auszuwertende Plasmavolumen und das spektrale Fenster optimierbar sind. Das diesem angepaßte matrixartige Bildaufnahmesystem enthält zweckmäßig eine CCD-Kamera mit wenigstens 10, insbesondere etwa 500 bis etwa 600 Zeilen (waagrechten Sensorplätzen) und etwa 500 bis etwa 600 Spalten (vertikalen Sensorplätzen). In praktisch vorteilhafter Ausbildung enthält das Bildaufnahmesystem (BA, BS, BV) eine elektronenoptische spektral breitbandige, abbildungsfehlerarme, zweidimensionale Bildverstärkereinheit BV, die eine Torzeitsteuerung mit einer Auflösung in ns-Bereich zur wahlfreien Erzeugung eines Zeitfensters für die Aufnahme besitzt ist und deren Verstärkung regelbar ist und einem integrierten Bildaufnehmer (BA) (CCD-Kamera).

In praktisch vorteilhafter und vereinfachter Ausbildung befindet sich die Bildaufnahme (Fotokathode des Bildverstärkers bzw. bei Betrieb ohne einen solchen der CCD-Chip der Kamera) ohne Zwischenschaltung einer weiteren abbildenden Optik direkt in der Bildebene des Spektrometers. Das Spektrometer kann zweckmäßig bildfeldkorrigierende Elemente (Flat-Field-Bildebene), nicht dargestellt, enthalten.

Im Falle des Chlornachweises bei PVC-Material über die Linie bei 837,6 nm und bei einer verwendeten Laserintensität von ca. $10^{11}$ W/cm$^2$, einer Wellenlänge von 530 nm und einem Fokusabstand e von 4 mm und in der Längsrichtung des Scheibenvolumens in y-Richtung betrug der optimale Wert für die Zeitverzögerung 4 μs und das Zeitfenster des Bildaufnahmesystems 100 ns. Der variable Fokusabstand e selbst, der zwischen etwa 3 und etwa 6 mm liegen kann, und die Zeitverzögerung sind aber so gewählt, daß der Anregungsgrad an der Stelle der Volumenscheibe (Pfeil A1) möglichst hoch ist, daß aber das Bremsstrahlkontinuum die Aufnahme der Linien nicht wesentlich behindert. Eine Optimierung des Fokusabstands, der Zeitverzögerung und des Zeitfensters ist jeweils mit Bezug auf die Laser-Objekt Bedingungen (z.B. Laserleistung, Oberfläche des Objekts, usw.) notwendig.

Zur Fokussierung des Laserstrahls ist eine langbrennweitige Optik FL günstig, im vorliegenden Fall beträgt die Brennweite f = 200 mm. Dadurch wird einerseits ein günstiger Arbeitsabstand erreicht und andererseits bewirkt die große Rayleigh-Länge, daß die Reproduzierbarkeit der einzelnen Plasmapulse wesentlich erhöht wird. Außerdem hat der damit verbundene, große Durchmesser des Fokus F die Wirkung, daß über eine gewisse Fläche des Objekts gemittelt wird. Durch die in diesem Fall eher ebene Expansionsgeometrie bleibt die Dichte im expandierenden Plasma PA länger hoch und die radialen Gradienten sind geringer.

Um die Analyseempfindlichkeit zu steigern, z. B., um noch Volumenprozentbruchteile von Chlor oder den anderen Halogenen erfassen zu können, ist in bestimmten Fällen eine Nachanregung des Plasmas während der Expansion erforderlich, wie in Figur 2 mittels einer Funkenstrecke B schematisch dargestellt ist. Die Funkenstrecke B besitzt z.B. Kupfer(Cu-)Elektroden, zwischen deren Spitzen eine Spannung U von bis ca. 5 kV anliegt. Die Entladeenergie von bis zu ca. 25 Ws speist sich aus einer Kapazität von ca. 2 µF. Zur Pulsformung dient eine Induktivität von ca. 100 µH. Durch die zusätzliche Queranregung (senkrecht zur Ausbreitungsrichtung des Plasmas PA) im Bereich vor dem Stoff T werden Ionisation und Anregung der Teilchen im Plasma PA zusätzlich verstärkt, so daß die vom Plasma ausgestrahlte Lichtmenge, auch am Ort der Volumenscheibe A2 wesentlich erhöht und somit ein verbessertes Nachweisvermögen für die zu analysierenden, geringen Mengen von Halogenen, insbesondere Chlor, erreicht wird. Der Fokusabstand e und das Zeitfenster müssen dabei empirisch neu angepaßt werden.

Figur 3 zeigt in einem Analysen-Diagramm I = f (λ) einen Vergleich, aus dem sich der Vorteil des hier benutzten Verfahrens zur üblichen Zeilenspektroskopie ergibt. Die beiden Kurven in Figur 3 sind unter den gleichen Bedingungen bezüglich Laser-Objekt, Wechselwirkung und Nachweis (Material (PVC), Oberflächenbeschaffenheit, Fokusabstand, Laserintensität, Spektralbereich, spektrale (apparative Auflösung, usw.) entstanden. Im oberen Spektrum ist über den vollen Kegelquerschnitt des expandierenden Plasmas, der auf ca. 500 Zeilen der Kamera abgebildet wurde, gemittelt. Man erkennt neben anderen Substituenten von PVC deutlich die isolierte Chlor-Linie CL bei 837,6 nm. Im unteren Spektrum wurde eine Zeilenkamera dadurch simuliert, daß nur über 20 Zeilen der Kamera gemittelt wurde. Dies ist um bis ca. einen Faktor zehn mehr als in Wirklichkeit von echten einzeiligen Kamera erfaßt würde. Trotzdem ist die Chlorlinie nur andeutungsweise zu erkennen, obgleich die Linien der anderen Konstituenten weiterhin gut sichtbar in Erscheinung treten. Außerdem ist im oberen Spektrum die Statistik besser. Der Vergleich zeigt aber auch im oberen Spektrum eine größere Linienbreite, was einerseits durch Bildfeh1er des Spektrometers SP (ohne Flat-Field Anordnung) und die Mitteilung über verschieden dichte Plasmabereiche zurückzuführen ist. Für das Verfahren stellt dies bei der Chlor-Linie von 837,6 nm wie ersichtlich jedoch keinerlei Einschränkung dar.

Die Kurven I und II wurden mit einer Speichertiefe von 8 bit aufgenommen und ausgewertet.

Das Verfahren und die Anordnung in den beschriebenen Ausführungen wurden für die quantitative Spektral-Analyse von Chlor mit überraschend guten Ergebnissen (bis zu einem Chlorgehalt von 0,5 %!) eingesetzt, und sie sind für die quantitative Bestimmung der anderen Halogene: Brom, Fluor und Jod ebenfalls vorteilhaft einsetzbar. Die Wellenlängenbereiche der Spektrallinien für die anderen Halogene sind in analoger Weise (sichtbarer Lichtbereich oder IR-Bereich s.o. und nicht verdeckt durch andere starke Spektrallinien) entsprechenden Spektrallinien-Tabellen entnehmbar und die davon besonders geeigneten Spektrallinienbereiche in praktischen Versuchen bestimmbar.

Verfahren und Anordnungen sind zur Chlor-Bestimmung in jeder Art von nichtmetallischen oder höchstens teilmetallischen Stoffen, insbesondere in Kunststoff, vorteilhaft geeignet. Die Chlor-Bestimmung ist besonders notwendig in Vinyl-haltigen Stoffen (PVC usw.), da beispielsweise im Recycling-Prozeß diese Stoffe ausgesondert werden. Der Chlorgehalt ist auch bei recycelbaren Kunststoffen, die z.B. im Spritzguß verarbeitet werden sollen, aus Korrosionsgründen sehr nachteilig.

Auch bei flammgeschützten Stoffen sind Verfahren und Anordnungen vorteilhaft einsetzbar wegen des Brom-Gehaltes dieser Stoffe, der beim Recyceln ebenfalls problematisch ist. Es sind darüber hinaus auch zu recycelnde Kunststoffe bekannt bei denen die Bestimmung von Fluor und Jod wichtig und vorteilhaft ist.

Das Verfahren der laser-induzierten Spektralanalyse wird dahingehend modifiziert, so daß damit die Analyse von Halogenen in Stoffen möglich wird. Dies geschieht dergestalt, daß mit einem Hochleistungs-Laser auf dem zu analysierenden Objekt ein Plasma erzeugt wird und die Lichtintensität eines in seiner Größe und Lage frei definierbaren Scheibenvolumenelementes des Plasmas in Verbindung mit einem Spektrometer und einem in seiner Empfindlichkeit, seiner zeitlichen Ansteuerbarkeit und Toröffnungszeit einstellbaren, zweidimensionalen Bildaufnahmesystems zur Analyse herangezogen wird. Durch die Mittelung über das relativ große Volumen über einen Bereich der Dichte- und Temperaturgradienten werden die Empfindlichkeit und Reproduzierbarkeit - im Vergleich zu üblichen eindimensionalen Detektionsverfahren - die entscheidend die Analyse von Halogenen ermöglichen, gesteigert.

## Patentansprüche

1. Verfahren zur Spektralanalyse mittels Laseremission von Halogen, insbesondere Chlor, enthaltenden, nichtmetallischen und höchstens, teilmetallischen Stoffen, wobei ein gepulster Laserstrahl (P) auf den Stoff (T) gelenkt wird zur Erzeugung eines Plasmas (PA) und das vom Plasma in einer Expansionsrichtung in Kegelform emittierte Licht optisch fokussiert, einem Spektrometer (SP) zugeführt und nach einer vorgegebenen Zeitverzögerung nach Auslösung des gepulsten Laserstrahls (P) analysiert wird und wobei der gepulste Laserstrahl (P) eine Energiedichte zwischen etwa $10^8$ und etwa $10^{12}$ W/cm$^2$ be-

sitzt, **dadurch gekennzeichnet, daß** zeitlich und räumlich über einen Bereich der Dichte- und Temperaturgradienten des Plasmas (PA) gemittelt wird, um eine stabile reproduzierbare und lichtstarke Spektrallinieninformation für die Analyse zu erhalten, indem die gesamte, wenigstens von einem scheibenförmigen Volumen (V) des Expansionskegels ausgehenden Lichtintensitäten aufsummiert und gemittelt werden.

2. Verfahren nach Anspruch 1, **dadurch gekennzeichnet, daß** ein Kegelschnitt-Scheibenvolumen (V) ausgewählt wird, das senkrecht zur Expansionsrichtung des Plasmas (PA) liegt und das durch einen einzigen gepulsten Laserstrahl (P) (Laserschuß) erzeugt wird.

3. Verfahren nach Anspruch 1, **dadurch gekennzeichnet, daß** ein Scheibenvolumen ausgewählt wird, das in Richtung zur Expansion des Plasmas (PA) liegt und das durch einen einzigen gepulsten Laserstrahl (P) (Laserschuß) erzeugt wird.

4. Verfahren nach Anspruch 1 oder 2 oder 3, **dadurch gekennzeichnet, daß** der Expansionskegel auf den Eingangsspalt (SL) des Spektrometers (SP) abgebildet wird, durch den Spektrometerspalt (SL) ein Scheibenvolumen (V) ausgeschnitten wird und die spektralaufgelöste Lichtemission des Scheibenvolumens (V) nach Durchgang durch das Spektrometer (SP) zweidimensional durch einen matrixartigen Bildaufnehmer (BA) erfaßt wird.

5. Verfahren nach einem der Ansprüche 1 bis 4, **dadurch gekennzeichnet, daß** die Lichtintensität über ein Zeitfenster von wenigstens 100 ns nach Ablauf der vorgegebenen Zeitverzögerung gemittelt und analysiert wird.

6. verfahren nach einem der Ansprüche 1 bis 4, **dadurch gekennzeichnet, daß** der mittlere Fokusabstand (e) zwischen dem nichtmetallischen oder teilmetallischen Stoff und dem Scheibenvolumen (V) etwa 3 bis etwa 6 mm beträgt.

7. Verfahren nach einem oder mehreren der Ansprüche 1 bis 6, **dadurch gekennzeichnet, daß** bei Chlor die vorgegebene Zeitverzögerung 4 µs zum Entstehen des Plasmas (PA) oder weniger beträgt.

8. Verfahren nach einem oder mehreren der Ansprüche 1 bis 7, **dadurch gekennzeichnet, daß** der gepulste Laserstrahl (P) eine Gauss-Verteilung hat, die von einem im $TEM_{oo}$-Mode betriebenen Laser (L) erzeugt wird.

9. Verfahren nach Anspruch 4, **dadurch gekennzeichnet, daß** der matrixartige Bildaufnehmer (BA) eine CCD-Kamera (CCD) mit einem wenigstens 10 Zeilen-Chip, insbesondere einem etwa 500 bis etwa 600 Zeilen-Chip, ist, wobei die Lichtintensität über die Längsrichtung des Spalts (SL) in den Zeilen und die spektrale Auflösung (Wellenlänge) in den Spalten der Matrix, oder umgekehrt erfaßt wird.

10. Verfahren nach Anspruch 4 oder 9, **dadurch gekennzeichnet, daß** dem matrixartigen Bildaufnehmer (BA) eine digitale Auswerteeinheit (DM) mit wenigstens 4 Bit Speichertiefe und wenigstens 10 Zeilen und der Spaltenzahl der entsprechenden Basisbreite der zu analysierenden Spektrallinie, also mit etwa 200 Speicherplätzen, nachgeschaltet ist.

11. Verfahren nach Anspruch 1 und einem oder mehreren der Ansprüche 2 bis 10, **dadurch gekennzeichnet, daß** das entstehende Plasma (PA) des Expansionskegels mittels einer zusätzlichen transversalen elektrischen Entladung Funkenstrecke (B) nachangeregt wird und das dann emittierte Licht dem Spektrometer (SP) zugeführt wird.

12. Verfahren nach Anspruch 1 und einen oder mehreren der Ansprüche 2 bis 11, **dadurch gekennzeichnet, daß** für die Chlor-Analyse die Spektrallinien im Wellenlängen-Bereich von etwa 480 nm bis etwa 550 nm, insbesondere bei etwa 480, 490, 500, 510, 520, 530, 540 - 550 nm oder bei ca. 838 nm oder bei ca. 859 nm herangezogen werden.

13. Verfahren nach Anspruch 1 und einem oder mehreren der Ansprüche 2 bis 12, **dadurch gekennzeichnet, daß** gleichzeitig durch parallele Aufnahmekanäle oder zeitlich nacheinander mehrere Spektralbereiche aufgenommen werden und nur Teilbereiche davon weiter ausgewertet werden.

14. Anordnung zur Durchführung der Laseremissions-Spektralanalyse nach Anspruch 1 und einem oder mehreren der Ansprüche 2 bis 13, **gekennzeichnet durch** einen gepulsten Laser (L) mit einer Energiedichte zwischen etwa $10^8$ und etwa $10^{12}$ W/cm$^2$, dessen gepulster Laserstrahl (P) auf den nichtmetallischen oder höchstens teilmetallischen Stoff (T) gerichtet ist, eine optisch fokussierende Einrichtung (LE), die das vom Plasma (PA) emittierte Licht zum Spalt (SL) eines Spektrometers (SP) lenkt und bündelt, einen matrixartigen Bildaufnehmer (BA), mit dem die Intensität des über den Spektrometerspalt (SL) abgebildeten Scheibenvolumens (V) des emittierten Lichts nach Durchgang **durch** das Spektrometer (SP) spektral aufgelöst und zeitlich und räumlich mittels einer Bildspeicher- und Auswerteeinrichtung (BS bzw. DM) aufsummierbar ist, und eine Steuereinrichtung (SC) zwischen dem Laser (L), dem Spektrometer (SP), dem Bildaufnehmer (BA) und der Bildspeicher- und Auswerteeinrichtung, (BS u. DM) zum zeitintervallrichtigen Speichern und Analysieren der Spektralsignale des emittierten Lichts.

**15.** Anordnung nach Anspruch 14, **gekennzeichnet durch** eine Auswerteeinrichtung (DM), die digitale Logikeinheiten enthält, denen die im Bildspeicher (BS) gespeicherten spektralen Signale zugeführt werden.

**16.** Anordnung nach Anspruch 14 oder 15, **dadurch gekennzeichnet, daß** der matrixartige Bildaufnehmer (BA) eine CCD-Kamera (CCD) mit wenigstens 10, insbesondere etwa 500 oder etwa 600 Zeilen und ebenso vielen Spalten ist.

**17.** Anordnung nach Ansprüche 14 und einem oder beiden der Ansprüche 15 und 16, **gekennzeichnet durch** eine Nachanregungseinrichtung, bestehend aus einer getriggerten Funkenstrecke (B) mit Cu-Elektroden etwa 5 kV Spannung, einer Kapazität von ca. 2 μF und einer Induktivität von ca. 100 μH.

**18.** Anordnung nach Anspruch 16, **dadurch gekennzeichnet, daß** dem Bildaufnehmer (BA) ein Bildverstärker (BV) vorgeschaltet ist, der zeitlich, bezüglich einer Tor- und Verzögerungszeit, mit einer Auflösung von bis zu ca. 10 ns steuerbar ist, um ein Zeitfenster von wenigstens 100 ns zu erzeugen und eine Verzögerungszeit von ca. 4 μs einzustellen.

**19.** Anordnung nach Anspruch 14, **dadurch gekennzeichnet, daß** das Spektrometer (SP) bildfeldkorrigierende Elemente (Flat-Field-Einrichtung) enthält.

**20.** Anordnung nach Anspruch 14 und einem oder mehreren der Ansprüche 15 bis 19, **dadurch gekennzeichnet, daß** der gepulste Laser im TEM$_{oo}$-Mode betrieben wird.

**21.** Anordnung nach Anspruch 14 und einem oder mehreren der Ansprüche 15 bis 19, **dadurch gekennzeichnet, daß** als abbildende Optik (LE, FL) des Plasmas ein Achromat verwendet wird.

**22.** Anordnung nach Anspruch 14 und einem oder mehreren der Ansprüche 15 bis 19, **dadurch gekennzeichnet, daß** als abbildende Optik des Plasmas eine Zoomoptik (FL) zur variablen Einstellung des Arbeitsabstandes (e) und des Abbildungsmaßstabs benutzt wird.

**23.** Anordnung nach Anspruch 13 und einem oder mehreren der Ansprüche 14 bis 19, **dadurch gekennzeichnet, daß** für die Abbildung in zwei Schritten zwei hintereinander geschaltete in y- und z-Richtung abbildende Zylinderlinsen (FL) vorgesehen sind, wodurch z.B. die Größe des zu untersuchenden Plasmavolumens in y- und z-Richtung einzeln festlegbar ist.

**Claims**

**1.** A method for spectral analysis by means of laser emission of non-metallic or at most partially metallic materials containing halogen, in particular chlorine, a pulsed laser beam (P) being directed at the material (T) to generate a plasma (PA) and the light emitted by the plasma in an expansion direction in conical form being focussed optically, being passed to a spectrometer (SP) and being analyzed after a predefined delay after the pulsed laser beam (P) has been triggered, and the pulsed laser beam (P) having an energy density between about $10^8$ and about $10^{12}$ W/cm$^2$, wherein averaging is carried out temporally and spatially over a range of density gradients and temperature gradients of the plasma (PA) in order to obtain stable, reproducible and high-luminosity spectral line information for analysis, by means of all of the luminous intensities emanating from at least one volume slice (V) of the expansion cone being summed and averaged.

**2.** A method as claimed in claim 1, wherein a conical section volume slice (V) is selected which is oriented perpendicularly to the expansion direction of the plasma (PA) and which is generated by a single pulsed laser beam (P) (laser shot).

**3.** A method as claimed in claim 1, wherein a volume slice is selected which is oriented in the direction of the expansion of the plasma (PA) and which is generated by a single pulsed laser beam (P) (laser shot).

**4.** A method as claimed in claim 1 or 2 or 3, wherein the expansion cone is projected onto the entrance slit (SL) of the spectrometer (SP), the spectrometer slit (SL) cuts out a volume slice (V), and the spectrally resolved light emission of the volume slice (V), having passed through the spectrometer (SP), is detected two-dimensionally by a matrix-type image recorder (BA).

**5.** A method as claimed in any of claims 1 to 4, wherein the luminous intensity is averaged and analyzed over a time window of at least 100 ns after the predefined delay has elapsed.

**6.** A method as claimed in any one of claims 1 to 4, wherein the mean focal distance (e) between the nonmetallic or partially metallic material and the volume slice (V) is from about 3 to about 6 mm.

**7.** A method as claimed in one or more of claims 1 to 6, wherein in the case of chlorine the predefined delay is 4 μs or less with respect to the plasma (PA) being produced.

8. A method as claimed in one or more of claims 1 to 7, wherein the pulsed laser beam (P) has a Gaussian distribution which is generated by a laser (L) operated in $TEM_{oo}$ mode.

9. A method as claimed in claim 4, wherein the matrix-type image recorder (BA) is a CCD camera (CCD) comprising a chip having at least 10 rows, in particular a chip having about 500 to 600 rows, the luminous intensity being detected along the longitudinal direction of the slit (SL) in the rows and the spectral resolution (wavelength) being detected in the columns of the matrix or vice versa.

10. A method as claimed in claim 4 or 9, wherein downstream of the matrix-type image recorder (BA) there is connected a digital analysis unit (DM) having a memory depth of at least 4 bits and having at least 10 rows and the number of columns of the corresponding base width of the spectral line to be analyzed, ie. with about 200 memory locations.

11. A method as claimed in claim 1 and one or more of claims 2 to 10, wherein the plasma (PA) produced of the expansion cone is postexcited by means of an additional transverse electric discharge spark gap (B) and the light emitted thereupon is passed to the spectrometer (SP).

12. A method as claimed in claim 1 and one or more of claims 2 to 11, wherein for the purpose of the chlorine analyses the spectral lines in the wavelength region from about 480 nm to about 550 nm, in particular at about 480, 490, 500, 510, 520, 530, 540 - 550 nm or at about 838 nm or at about 859 nm are used.

13. A method as claimed in claim 1 and one or more of claims 2 to 12, wherein a plurality of spectral ranges are recorded either simultaneously via parallel recording channels or consecutively, and only subranges thereof are subjected to further analysis.

14. An arrangement for carrying out the laser emission spectral analysis as claimed in claim 1 and one or more of claims 2 to 13, comprising a pulsed laser (L) having an energy density between about $10^8$ and about $10^{12}$ W/cm$^2$, whose pulsed laser beam (P) is directed at the nonmetallic or at most partially metallic material (T), an optically focussing apparatus (LE), which directs and colimates the light emitted by the plasma (PA) to the slit (SL) of a spectrometer (SP), a matrix-type image recorder (BA) by means of which the intensity of the volume slice (V), projected via the spectrometer slit (SL), of the emitted light after it has passed through the spectrometer (SP) is spectrally resolved and can be summed, temporally and spatially, by means of an image storage device and analysis device (BS and DM), and a control device (SC) between the laser (L), the spectrometer (SP), the image recorder (BA) and the image storage device and analysis device, (BS and DM) for correct storage and analysis, in terms of time intervals, of the spectral signals of the emitted light.

15. An arrangement as claimed in claim 14, comprising an analysis device (DM) which contains digital logic units to which the spectral signals stored in the image memory (BS) are passed.

16. An arrangement as claimed in claim 14 or 15, wherein the matrix-type image recorder (BA) is a CCD camera (CCD) having at least 10, in particular about 500 or about 600 rows and as many columns.

17. An arrangement as claimed in claim 14 and one or both of claims 15 and 16, comprising a postexcitation device which comprises a triggered spark gap (B) having Cu electrodes, a voltage of about 5 kV, a capacitance of about 2 μF and an inductance of about 100 μH.

18. An arrangement as claimed in claim 16, wherein there is connected, upstream of the image recorder (BA), an image amplifier (BV) which can be controlled temporally, in terms of a gate and delay time, with a resolution of up to about 10 ns, in order to generate a time window of at least 100 ns and to set a delay time of about 4 μs.

19. An arrangement as claimed in claim 14, wherein the spectrometer (SP) comprises image-field correcting elements (flat-field apparatus).

20. An arrangement as claimed in claim 14 and one or more of claims 15 to 19, wherein the pulsed laser is operated in $TEM_{oo}$ mode.

21. An arrangement as claimed in claim 14 and one or more of claims 15 to 19, wherein the imaging optics (LE, FL) used of the plasma comprise an achromat.

22. An arrangement as claimed in claim 14 and one or more of claims 15 to 19, wherein the imaging optics used of the plasma comprise zoom optics (FL) for variable setting of the working distance (e) and the linear magnification.

23. An arrangement as claimed in claim 13 and one or more of claims 14 to 19, wherein, for the purpose of images being formed in two steps, two cylindrical lenses (FL) connected in series are provided, which form images in the y and z direction, it thus being possible, e.g., for the size of the plasma volume which is to be studied to be individually defined in the y and z direction.

## Revendications

1. Procédé pour l'analyse spectrale, au moyen d'une émission laser, de matériaux non métalliques et tout au plus partiellement métalliques contenant un halogène, en particulier du chlore, dans lequel un rayon laser à impulsions (P) est orienté sur le matériau (T) pour créer un plasma (PA), et la lumière émise par le plasma dans une direction d'expansion de forme conique est concentrée optiquement, amenée à un spectromètre (SP) et est analysée après une temporisation prédéterminée qui suit le déclenchement du rayon laser à impulsions (P), et dans lequel le rayon laser à impulsions (P) possède une densité d'énergie comprise entre environ $10^8$ et environ $10^{12}$ W/cm$^2$, **caractérisé en ce qu'**on détermine dans une région la moyenne des gradients de densité et de température du plasma (PA) dans le temps et dans l'espace pour obtenir en vue de l'analyse une information de lignes spectrales reproductible, stable et intensément lumineuse, en additionnant l'ensemble des intensités lumineuses provenant au moins d'un volume (V) en forme de disque du cône d'expansion et en en déterminant la moyenne.

2. Procédé selon la revendication 1, **caractérisé en ce que** l'on sélectionne un volume en disque (V) en tranche de cône qui est situé perpendiculairement à la direction d'expansion du plasma (PA) qui est créé par un seul rayon laser à impulsions (P) (tir laser).

3. Procédé selon la revendication 1, **caractérisé en ce que** l'on sélectionne un volume en disque qui est situé dans la direction d'expansion du plasma (PA) et qui est créé par un seul rayon laser à impulsions (P) (tir laser).

4. Procédé selon la revendication 1, 2 ou 3, **caractérisé en ce que** le cône d'expansion est reproduit sur la fente d'entrée (SL) du spectromètre (SP), un volume en disque (V) est découpé par la fente (SL) du spectromètre et l'émission lumineuse du volume en disque (V), résolue spectralement, est enregistrée dans deux dimensions par un enregistreur d'images (BA) de type à matrice après avoir traversée le spectromètre (SP).

5. Procédé selon l'une des revendications 1 à 4, **caractérisé en ce que** l'intensité lumineuse a sa moyenne calculée et est analysée sur un intervalle de temps d'au moins 100 ns après écoulement de la temporisation prédéterminée.

6. Procédé selon l'une des revendications 1 à 4, **caractérisé en ce que** la distance focale moyenne (e) entre le matériau non métallique ou partiellement métallique et le volume en disque (V) est d'environ 3 à environ 6 mm.

7. Procédé selon l'une ou plusieurs des revendications 1 à 6, **caractérisé en ce que** dans le cas du chlore, la temporisation prédéterminée en vue de l'apparition du plasma (PA) est de 4 μs ou moins.

8. Procédé selon l'une ou plusieurs des revendications 1 à 7, **caractérisé en ce que** le rayon laser à impulsions (P) présente une distribution de Gauss qui est créée par un laser (L) fonctionnant en mode TEM$_{00}$.

9. Procédé selon la revendication 4, **caractérisé en ce que** l'enregistreur d'images (BA) de type à matrice est une caméra CCD (CCD) présentant une puce d'au moins 10 lignes, en particulier une puce d'environ 500 à environ 600 lignes, l'intensité lumineuse étant enregistrée dans les lignes de la matrice suivant la direction longitudinale de la fente (SL) et la résolution spectrale (longueur d'onde) étant enregistrée dans les colonnes de la matrice ou inversement.

10. Procédé selon la revendication 4 ou 9, **caractérisé en ce qu'**en aval de l'enregistreur d'images (BA) de type à matrice est raccordée une unité numérique d'évaluation (DM) présentant au moins une profondeur de mémoire de 4 bits et au moins 10 lignes, et le nombre des colonnes de la largeur de base qui correspond à la ligne spectrale à analyser, et donc environ 200 emplacements de mémoire.

11. Procédé selon la revendication 1 et l'une ou plusieurs des revendications 2 à 10, **caractérisé en ce que** le plasma (PA) qui apparaît dans le cône d'expansion est encore excité au moyen d'une décharge électrique transversale supplémentaire, l'éclateur (B) et la lumière alors émise est amenée au spectromètre (SP).

12. Procédé selon la revendication 1 et l'une ou plusieurs des revendications 2 à 11, **caractérisé en ce que** pour l'analyse du chlore, on se sert des lignes spectrales dans la plage de longueurs d'onde d'environ 480 nm à environ 550 nm, en particulier à environ 480, 490, 500, 510, 520, 530, 540 - 550 nm ou à environ 838 nm ou à environ 859 nm.

13. Procédé selon la revendication 1 et l'une ou plusieurs des revendications 2 à 12, **caractérisé en ce que** plusieurs plages spectrales sont enregistrées simultanément, par des canaux d'enregistrement parallèles, ou successivement dans le temps, et seules des plages partielles parmi celles-là sont évaluées ultérieurement.

14. Agencement en vue de la mise en oeuvre de l'analyse spectrale par émission laser selon la revendication 1 et l'une ou plusieurs des revendications 2 à 13, **caractérisé par** un laser à impulsions (L) présentant une densité d'énergie comprise entre environ $10^8$ et environ $10^{12}$ W/cm$^2$, dont le rayon laser à impulsions (P) est dirigé sur le matériau non métallique ou tout au plus partiellement métallique (T), un dispositif optique de focalisation (LE) qui oriente la lumière émise par le plasma (PA) vers la fente (SL) d'un spectromètre (SP) et la concentre, un enregistreur d'images (BA) de type à matrice avec lequel l'intensité du volume en disque (V) de la lumière émise formée par l'intermédiaire de la fente (SL) du spectromètre est résolue spectralement après avoir traversée le spectromètre (SP) et peut être additionnée dans le temps et dans l'espace au moyen d'un dispositif de mémorisation d'images et d'évaluation (BS ou DM), et un dispositif de commande (SC) entre le laser (L), le spectromètre (SP), l'enregistreur d'images (BA) et le dispositif de mémorisation d'images et d'évaluation (BS et DM) pour la mémorisation et l'analyse à des intervalles de temps des signaux spectraux de la lumière émise.

15. Agencement selon la revendication 14, **caractérisé par** un dispositif d'évaluation (DM) qui contient les unités logiques numériques auxquelles les signaux spectraux mémorisés dans la mémoire d'images (BS) sont amenés.

16. Agencement selon la revendication 14 ou 15, **caractérisé en ce que** l'enregistreur d'images (BA) de type à matrice est une caméra CCD (CCD) présentant au moins 10 lignes, en particulier environ 500 ou environ 600 lignes et un même nombre de colonnes.

17. Agencement selon la revendication 14 et l'une des revendications 15 et 16, ou les deux, **caractérisé par** un dispositif de post-excitation constitué d'un éclateur (B) à gâchette présentant des électrodes en Cu et une tension d'environ 5 kV, une capacité d'environ 2 μF et une inductance d'environ 100 μH.

18. Agencement selon la revendication 16, **caractérisé en ce qu'**un amplificateur d'images (BV) est raccordé en amont de l'enregistreur d'images (BA) et peut être commandé dans le temps, en ce qui concerne une durée de porte et une temporisation avec une résolution pouvant atteindre environ 10 ns, pour créer un intervalle de temps d'au moins 100 ns et pour régler une temporisation d'environ 4 μs.

19. Agencement selon la revendication 14, **caractérisé en ce que** le spectromètre (SP) contient des éléments de correction du champ d'images (dispositif "Flat-Field").

20. Agencement selon la revendication 14 et l'une ou plusieurs des revendications 15 à 19, **caractérisé en ce que** le laser à impulsions est utilisé en mode TEM$_{00}$.

21. Agencement selon la revendication 14 et l'une ou plusieurs des revendications 15 à 19, **caractérisé en ce que** l'on utilise comme optique (LE, FL) de formation d'image du plasma un achromat.

22. Agencement selon la revendication 14 et l'une ou plusieurs des revendications 15 à 19, **caractérisé en ce que** l'on utilise comme optique de formation d'image du plasma une optique zoom (FL) pour l'ajustement variable de la distance de travail (e) et de l'échelle de l'image.

23. Agencement selon la revendication 13 et l'une ou plusieurs des revendications 14 à 19, **caractérisé en ce que** deux lentilles cylindriques (FL) disposées l'une derrière l'autre et formant une image dans la direction y et dans la direction z sont prévues pour la formation de l'image en deux étapes, ce qui permet de déterminer par exemple la taille du volume de plasma séparément dans la direction y et dans la direction z.

Fig. 1

Fig. 2

Fig. 3